# EUROPÄISCHE PATENTSCHRIFT

(11) **EP 1 090 713 B1**
(45) Veröffentlichungstag und Bekanntmachung des Hinweises auf die Patenterteilung: **26.05.2004**
(21) Anmeldenummer: 99120105.4
(22) Anmeldetag: 08.10.1999
(51) Int. Cl.: B23Q 9/00

(54) **Fräshilfe mit einer Handoberfräse**
Accessory with a hand routing machine
Accessoire avec une machine à fraiser manuelles

(43) Veröffentlichungstag der Anmeldung: 11.04.2001
(73) Patentinhaber: TTS Tooltechnic Systems AG & Co. KG, 73240 Wendlingen (DE)
(72) Erfinder: Arlart, Gerhard, 75305 Neuenburg (DE)
(74) Vertreter: Reimold, Otto, Dipl.-Phys. Dr.

(56) Entgegenhaltungen:
- DE-U- 9 000 210
- US-A- 1 745 780
- US-A- 5 094 279
- US-A- 5 318 082

## Beschreibung

Die vorliegende Erfindung betrifft eine Fräshilfe mit einer Handoberfräse gegen unbeabsichtigtes Abkippen der Oberfräse während des Fräsvorganges.

Beim Ausfräsen von mehreckigen Ausnehmungen aus einem Werkstück mittels einer Oberfräse und einer der Ausfräsung entsprechenden Schablone stellt es sich stets als schwieriges Unterfangen dar,die Oberfräse sauber am Innenrand der Schablone entlang zu führen un gleichzeitig ein Abkippen der Fräse zu vermeiden.

Bisherige Hilfen sind entweder nicht für alle Fräsentypen geeignet oder im Ergebnis unbefriedigend und zeitaufwendig.

Der vorliegenden Erfindung liegt daher die Aufgabe zugrunde,eine Fräshilfe vorzuschlagen,bei der der Fräsvorgang wesentlich erleichtert wird.

Diese Aufgabe wird erfindungsgemäß durch die Merkmale des Hauptanspruches gelöst.Weitere vorteilhafte Ausgestaltungen sind den Unteransprüchen zu entnehmen.

Die Fräshilfe weist danach einen kreisförmigen Grundkörper mit derselben Dicke wie die Schablone auf.Am Rand dieses Grundkörpers befindet sich an mindestens einer Stelle eine Ausnehmung,deren Tiefe geringstens so groß sein muß,wie die Kopierhülse,welche sich konzentrich zum Fräswerkzeug an der Frästischunterseite befindet,in der Länge über die Frästischunterseite hervorragt.Die Ausnehmung ist zur Mitte des Grundkörpers hin gewölbt,wobei der Radius der Wölbung dem Außenradius der Kopierhülse-entspricht. Zum Rand des Grundkörpers hin ist die Ausnehmung offen.An der Stelle,an der zwischen der Wölbung der Ausnehmung und dem Rand des Grundkörpers die größte Entfernung besteht,befindet sich leicht zur Mitte des Grundkörpers hin versetzt eine Bohrung zur Aufnahme eines als Halteelement dienenden zylindrischen Stiftes.
Die Länge des Stiftes ist etwa so groß,daß sein Ende in einer Ebene mit der Fläche des Grundkörpers liegt.Die so gestaltete Ausnehmung gewährleistet,daß die Fräshilfe,die mit der Seite,die die durchgehende Kreisfläche aufweist, auf dem Werkstück aufliegt,während des Fräsvorgangs einerseits zwischen Frästischunterseite und Werkstück befindlich mitbewegt wird,andererseits beim Berühren des Schabloneninnenrandes anfängt sich um die Kopierhülse zu drehen.

Bei diesem Vorgang bleibt sie immer vollständig unter der Frästischunterseite,schwenkt aber gleichzeitig aus dem Eckbereich der Schablone heraus und gewährt,daß die Kopierhülse der Fräse stets am Innenrand besagter Schablone anliegen kann.Hierbei ist die Ausgestaltung des Eckbereiches nicht von Belang.Die Funktionalität ist auch bei konvexen, konkaven oder andersartigen Eckbereichen voll gegeben.

Gemäß einer weiteren Ausführungsform ist die Ausnehmung im Grundkörper so gestaltet,daß sie die Form eines Kreissegmentes aufweist und zweistufig ist. Die Ausnehmung mit dem kleineren Radius,dem ungefähr die Größe des Innenradius' der Kopierhülse entspricht,erstreckt sich über die gesamte Dicke des Grundkörpers.
Der zweite Teil der ebenfalls radienförmigen Ausnehmung ist geringfügig größer als der Außenradius der Kopierhülse und geringstens so tief,daß die Kopierhülse am Grund der Ausnehmung nicht aufsteht.In dem Teil der Ausnehmung mit dem kleineren Radius ist ein als Halteelement dienendes Rohrsegment derart befestigt,vorzugsweise mittels einer Schraube,daß dessen äußere Wölbung fest am kleineren Radius der Ausnehmung anliegt.

Die Länge des Rohrsegmentes entspricht der Dicke des Grundkörpers.

Bei dieser Ausführungsform ist somit zwischen Rohrsegment und dem größeren Radius der Ausnehmung eine Nut vorhanden, die die Kopierhülse aufnimmt,und somit einen Haltebereich bietet,der einen einwandfreien Schwenkvorgang ermöglicht.

Andere Ausführungsformen der Fräshilfe mit zumindest teilweisem kreisförmigen Grunkörper,wie beispielsweiser eliptischer oder halbkreisförmiger Grundfläche sind selbstverständlich ebenfalls denkbar.Diese können anstelle einer Ausnehmung,d.h.eines Haltebereiches,auf der dem Frästisch zugewandten Seite eine Oberflächenbeschaffenheit haben,die eine höhere Haftreibung aufweist,als die der dem Werkstück zugewandten Seite.
Hierdurch wird erreicht,daß die Fräshilfe auf dem Werkstück gleiten kann,während sie an der Unterseite des Frästisches haftet.
Berührt die Fräshilfe beim Fräsvorgang den Innenrand der Schablone,schwenkt sie wie bei den anderen Ausführungsformen aus dem Eckbereich.
Es ist jedoch ein größerer Kraftaufwand erforderlich als bei vorher beschriebenen Ausführungsformen.
Um diesen Kraftaufwand minimal zu halten,sind bei den kreisförmigen Ausgestaltungen sowohl beide Flächen als auch der Rand der Fräshilfe hoch gleitfähig,was unter Verwendung von Materialien wie Aluminium,Kunststoffen oder behandeltem Holz erreicht wird.

Zusätzlich können zur Verbesserung der Gleiteigenschaften auf der Werkstück zugewandten Seite der Fräshilfe zum Beispiel Kugellager eingelassen werden.

Nachfolgend wird die Erfindung anhand eines Ausführungsbeispiels in Verbindung mit den begleitenden Zeichnungen näher erläutert.Es stellen dar:
- Fig.1: eine Draufsicht der Fräshilfe ohne Werkstück und Oberfräse und Schablone
- Fig.2: eine schematische Querschnittdarstellung der Fräshilfe mit Schablone,Oberfräse und Werkstück entlang der Linie A-A gemäß der Fig.1
- Fig.3: eine schematische Querschnittdarstellung der Fräshilfe mit Schablone,Oberfräse und Werkstück entlang der Linie B-B gemäß der Fig.1
- Fig.4: und Fig.5 zwei Fräshilfen mit teilweisen kreisförmigem Grundkörper.

Die insgesamt mit 1 bezeichnete Fräshilfe weist einen zumindest teilweisen kreisförmigen Grundkörper 11 auf,der dieselbe Dicke wie die Schablone 8 hat und eine Ausnehmung 2 mit ungefähr gleichgroßem Radius wie der der Kopierhülse 6.

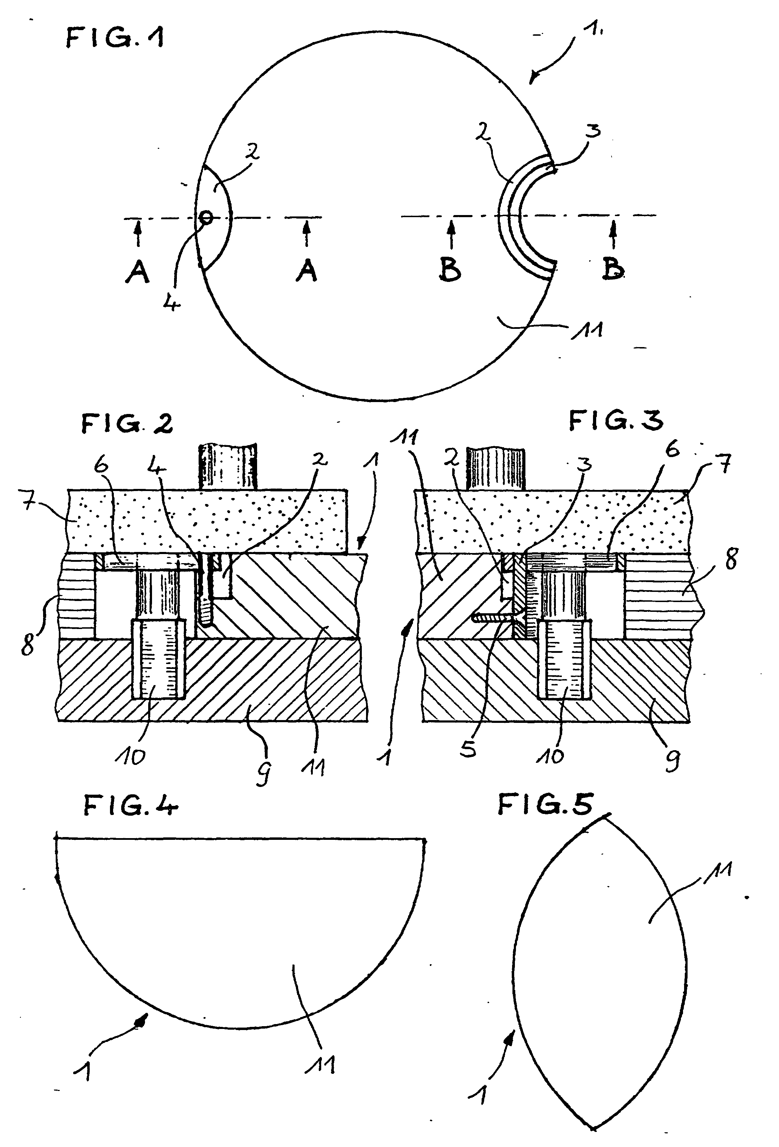

Fig.2 zeigt den Frästisch 7 einer nicht weiter dargestellten Oberfräse,der auf einer Seite auf der Fräshilfe 1,auf der anderen auf einer Schablone 8 aufliegt.
Die am Frästisch 7 befestigte Kopierhülse 6 gleitet während des Fräsvorganges am Rand der Schablone 8 entlang und greift zugleich in die Ausnehmung 2,wo sie den Stift 4 hintergreift.

Dieses ermöglicht,daß die Fräshilfe 1 sich bei Berührung mit der Schablone 8 um die Kopierhülse 6 dreht und gleichzeitig während des Fräsvorganges mitgeführt wird.

Der Frästisch 7 hat somit eine ständig gleichbleibende Auflage auf der Fräshilfe 1,wodurch ein Abkippen der Oberfräse vermieden wird.

In Fig.3 ist ein Rohrsegment 3 dargestellt,das mittels einer Schraube 5 in der Ausnehmung 2 am Grundkörper 11 befestigt ist. Die Kopierhülse6 hintergreift das Rohrsegment 3,dessen Außenradius dem Innenradius der Kopierhülse 6 entspricht.Die Kopierhülse 6 sitzt so zwischen der oberen Stufe der Ausnehmung 2 und dem Rohrsegment 3,daß ein einwandfreies Drehen der Fräshilfe 1 um die Kopierhülse 6 ermöglicht wird.Der Kontakt zwischen Fräswerkzeug 10 und Fräshilfe 1 ist hierbei ausgeschlossen.Das Werkstück 9 wird problemlos bearbeitet.

In Fig.4 und Fig.5 sind zwei Fräshilfen 1 mit teilweisem kreisförmigen Grundkörper 11 dargestellt,wobei die Oberfläche auf der dem Frästisch 7 zugewandten Seite eine höhere Haftreibung,als auf der dem Werkstück 9 zugewandten Seite aufweist.Hierdurch wird während des Fräsvorganges ein Verbleib der Fräshilfe 1 unter dem Frästisch 7 gewährleistet.
Bei Berührung des so gestalteten Grundkörpers 11 mit der Schablone 8 ,dreht sich die Fräshilfe 1 um die Kopierhülse 6 und schwnkt dabei aus dem Eckbereich der Schablone 8.

## Patentansprüche

1. Fräshilfe mit einer Handoberfräse mit einer Schablone (8) gegen unbeabsichtigtes Abkippen der Oberfräse, mit einem mindestens teilweisen kreisförmigen Grundkörper (11) mit derselben Dicke wie die Schablone (8), wobei eine das Fräswerkzeug umgebende Kopierhülse (6) der Handoberfräse an der Schablone (8) entlang geführt wird, eine die Kopierhülse (6) derart aufnehmende, zur Mitte des Grundkörpers (11) hin gewölbte Ausnehmung (2), daß die Kopierhülse (6) ein an dem Grundkörper (11) im Bereich der Ausnehmung (2) angeordnetes Halteelement (3,4) hintergreift und eine sämtliche Seiten des Grundkörpers (11) betreffende hochgleitfähige Oberfläche.

2. Vorrichtung nach Anspruch 1, **dadurch gekennzeichnet, daß** die Fläche des Grundkörpers (11) als Vollkreis ausgebildet ist.

3. Vorrichtung nach Anspruch 1, **dadurch gekennzeichnet, daß** der Grundkörper (11) elipsen-, kreissegment-, ring-, oder sichelförmig ausgebildet ist.

4. Vorrichtung nach Anspruch 3, **dadurch gekennzeichnet, daß** die dem Frästisch (7) zugewandte Seite des Grundkörpers (11) eine höhere Haftreibung aufweist als die dem Werkstück (9) zugewandte Seite.

## Claims

1. Routing aid with a hand router with a pattern (8) designed to avoid unintended tilting of the router, with an at least partly circular base (11) of the same thickness as the pattern (8), whereby a guide bush (6) of the hand router which surrounds the routing tool, is drawn along the pattern (8), a cut-away section (2), curved towards the centre of the base (11), which receives the guide bush (6) in such a way that the guide bush (6) grasps from behind a holding component (3,4) situated on the base (11) in the area of the cut-away section (2), and a surface, capable of sliding easily with regard to all sides of the base (11).

2. Device according to claim 1, **characterized in that** the surface of the base (11), forms a complete circle.

3. Device according to claim 1, **characterized in that** the base (11) forms an ellipse, a segment of a circle, a ring or a crescent.

4. Device according to claim 3, **characterized in that** the side of the base (11) which faces the routing table (7) has a greater static friction coefficient than the side which faces the workpiece (9).

## Revendications

1. Accessoire de fraisage avec une défonceuse à main et un gabarit (8), visant à empêcher la défonceuse de basculer de façon involontaire, comprenant un corps de base (11) au moins partiellement circulaire de même épaisseur que le gabarit (8), un manchon de copie (6) de la défonceuse à main, entourant l'outil de fraisage, étant guidé le long du gabarit (8), comprenant un évidement (2) cintré en direction du centre du corps de base (11), recevant le manchon de copie (6) de telle sorte que le manchon de copie (6) saisisse par derrière un élément de maintien (3, 4) monté sur le corps de base (11) dans la zone de l'évidement (2), et présentant une surface extrêmement glissante sur tous les côtés du corps de base (11).

2. Dispositif selon la revendication 1, **caractérisé en ce que** la surface du corps de base (11) est conformée en cercle entier.

3. Dispositif selon la revendication 1, **caractérisé en ce que** le corps de base (11) présente une forme en ellipse, en secteur de cercle, en anneau ou en croissant.

4. Dispositif selon la revendication 3, **caractérisé en ce que** le côté du corps de base (11) qui est orienté vers la table de fraisage (7) présente une adhérence supérieure au côté du corps de base qui est orienté vers la pièce à usiner (9).
